# EUROPÄISCHE PATENTSCHRIFT

(11) **EP 0 443 600 B1**
(45) Veröffentlichungstag und Bekanntmachung des Hinweises auf die Patenterteilung: **27.07.1994**
(21) Anmeldenummer: 91102610.2
(22) Anmeldetag: 22.02.1991
(51) Int. Cl.: H02G 11/00

(54) **Einrichtung zur Energieübertragung bei Drehbewegungen**
Device for power transfer in rotary motion
Dispositif de transmission d'énergie en mouvement rotatif

(30) Priorität: 22.02.1990 DE 4005594
(43) Veröffentlichungstag der Anmeldung: 28.08.1991
(73) Patentinhaber: PWH Anlagen + Systeme GmbH, D-66386 St. Ingbert-Rohrbach (DE)
(72) Erfinder: Herkenrath, Karl, W-6600 Saarbrücken (DE)
(74) Vertreter: John, Ernst

(56) Entgegenhaltungen:
- DD-B- 0 033 594
- DE-A- 3 511 471
- DE-U- 7 732 412
- GB-A- 2 104 861

## Beschreibung

Die Erfindung betrifft eine Einrichtung zur Energieübertragung bei Drehbewegungen, insbesondere von einem feststehenden zu einem drehenden System oder umgekehrt, mit einem festen Einspeise- und einem variablen Ausspeisepunkt, Führungsbahnen, die unter Bildung eines Innen sowie eines Außenradius im Bereich des drehbaren bzw. des feststehenden Systems angeordnet sind, einem auf diesen Führungsbahnen in Umfangsrichtung verfahrbaren Wagen sowie im Bereich des Wagens vorgesehenen Führungselementen zur Aufnahme und Umlenkung der axial übereinander angeordneten Leitungen.

Durch die DE-PS 26 41 459 ist ein Kabelwagen mit am Fahrwerk hängendem bügelförmigen Oberteil eines Kabelträgers und einem mit dem Oberteil lösbar verbindbaren, die Kabel unterfangenden Unterteil bekannt. Das in den zurückfedernd spreizbaren Schenkeln des Oberteils gelagerte Unterteil weist eine Einrastverzahnung auf, die mit einer entsprechenden Einrastverzahnung an der Innenseite der Schenkel des Oberteiles korrespondiert. Hierbei wird das die festzulegenden Kabel unterfangende Unterteil des Kabelträgers einfach in das Oberteil bis zur Klemmung der Kabel hineingedrückt, was auch über Kopf leicht möglich ist, zumal mit zusätzlichen Befestigungselementen nicht hantiert werden muß. Gleichermaßen leicht läßt sich das Unterteil des Kabelträgers im Bedarfsfall von dem Oberteil durch Spreizen der Schenkel des Oberteiles lösen. Der Nachteil dieses Kabelwagens ist im wesentlichen darin begründet, daß er einerseits nur für die horizontale Kabelführung geeignet ist und zum anderen, selbst bei Eignung für die Umfangsrichtung, einen unverhältnismäßig großen Bauraum benötigen würde, wobei eine exakte Führung der Kabel in Umfangsrichtung kaum realisierbar erscheint.

Durch das deutsche Gebrauchsmuster 86 13 181 ist eine von einem in der Mitte einer definierten Fahrstrecke liegenden Festpunkt ausgehende zwangsgeführte Leitung zur Versorgung eines entlang der Fahrstrecke verfahrbaren Verbrauchers bekannt, der über einen am verbraucherseitigen Ende der Leitung angeordneten, längs einer entlang der Fahrstrecke verlaufenden Laufschiene verfahrbaren Mitnehmer, mit dem eine im wesentlichen eine der halben Länge der Fahrstrecke entsprechende Länge aufweisende Leitung verbunden ist, mit einer sich ausgehend von einem Ende der Fahrstrecke im Abstand unterhalb des Mitnehmers erstreckende Leitungsanlage und mit einer sich an der Laufschiene entlang der Laufschiene verfahrbar führenden, eine die halbe Länge der Fahrstrecke aufweisenden am der Leitungsablage zugekehrten Ende in ein bogenförmig zurückverlaufendes, die Leitung beidseitig führendes Führungsstück übergehenden Leitungsauflage. Die Leitungsauflage ist in Abständen auf Ständern gelagert, die am Fuß mit Rollen bestückt in einer auf dem Flur verlaufenden Laufschiene zwangsgeführt sind. Diese als sogenannte Energiekette bekannte Leitungsführung ist ausschließlich geeignet für horizontale Bewegungen. Jedoch kann man auch diese Energieketten in vertikaler Richtung einbauen, um eine entsprechende Leitungsumlenkung zu ermöglichen. Der hier gegebene Nachteil liegt in einer ungenauen Führung der Leitungen. Für eine Energiezuführung zwischen relativ zueinander drehenden Systemen ist diese Art von Leitungsführung nicht verwendbar.

Eine ähnlich gelagerte Leitungsführung ist beispielsweise der DE-PS 35 11 471 zu entnehmen, bei welcher der Leitung ein sich zwischen Festpunkt und Mitnehmer erstreckendes, die Leitung im Bereich der Leitungsauflage unterfangendes, im Bereich eines Führungsstückes hinterfangendes und im Bereich der Leitungsablage überdeckendes Federstahlband zugeordnet ist, mit dem die Leitung durch in Abständen von ihm ausgehende Bügel unter Erhaltung der Relativbeweglichkeit der Leitung gegenüber dem Federstahlband zusammengefaßt ist und an dem in Abständen auf der Leitungsauflage und an der Umlenkung abrollende Laufrollen angeordnet sind. Die Nachteile dieser Leitungsführung sind im wesentlichen auch darin begründet, daß ausschließlich eine Leitungsführung mit Umlenkung in Horizontalrichtung realisiert werden kann. Selbst wenn ein derartiges System für relativ zueinander drehbare Systeme zur Anwendung kommen könnte, so weist es den Nachteil auf, daß die Leitungen stets außerhalb der Symmetrieachse des Federstahlbandes geführt würden und es somit zur Einleitung unerwünschter Beanspruchungen kommen würde, die in relativ kurzer Zeit zu Beschädigungen an den Leitungen führen würden.

Darüber hinaus ist aus der DD-PS 33 594 eine Anordnung zur kreisförmigen Führung von Kabeln und Leitungen von einem festen Speisepunkt auf den schwenkbaren Teil eines Gerätes, insbesondere Tagebaugerätes vorbekannt. Im Bereich des feststehenden Teiles ist ein auf Führungsbahnen in Umfangsrichtung bewegbarer Wagen vorgesehen, der zur Aufnahme mehrerer, mit Abstand zueinander angeordneter Scheiben oder Rollen dient. Die Kabel sind auf im radial äußeren Bereich des feststehenden Teiles vorgesehenen Kabelhalterungen untereinander abgelegt und werden mittels der Scheiben oder Rollen umgelenkt und an einen Klemmkasten auf dem drehbaren Teil angeschlossen. Der Wagen mitsamt der Scheiben wird hierbei ohne besondere Antriebsmittel durch den wechselseitigen Zug der Kabel mit den Anschlüssen am schwenkbaren Teil des Gerätes als lose Rolle bewegt. Die Nachteile dieser Anordnung sind im wesentlichen darin begründet, daß bei Verwendung von Scheiben oder Rollen als Führungselemente, die Kabel um 360° umgelenkt werden müssen, ehe sie weitergeführt werden können. Da keine weiteren Antriebsmittel vorgesehen sind, muß die Zugkraft zur Bewegung des Wagens durch die Kabel aufgebracht werden, die demzufolge einer entsprechenden Vorspannung zu unterwerfen sind, damit zumindest ein Reibschluß an den Scheiben oder Rollen herbeigeführt werden kann. Ist dies jedoch der Fall, treten Probleme beim Ablegen der Kabel im äußeren Bereich des feststehenden Teiles auf, da das Kabel bestrebt ist, den geradlinigen Verlauf zu den Scheiben oder Rollen einzunehmen. Ein sinnvolles Ablegen der Kabel erscheint somit ausgeschlossen zu sein. Ferner nachteilig ist festzustellen, daß das Führungselement axial relativ hoch baut und bei der Umlenkung der Kabel beträchtliche Kräfte (Reibung, Zug, Druck, Verdrehung) in dieselben eingeleitet werden, die zu einem raschen Ausfall führen können.

Bei der DE-U 77 32 412 liegen die Kabel im Gegensatz zu der vorgenannten DD-PS 33 594 am Außenumfang an statt auf Kabelhalterungen in Rillen von mehreren, auf einem Wagen umlaufenden Rollen. Diese Kabelhalterung schädigt die Kabel hervorgerufen durch die ständigen Überrollungen noch stärker, was die Lebensdauer der Energieübertragungseinrichtung einschränkt.

Der Erfindung liegt, ausgehend von der DD-PS 33 594, die Aufgabe zugrunde, Leitungen, wie Kabel, Schläuche oder dgl., von einem feststehenden System in ein drehendes System dergestalt umzuleiten, daß ohne zusätzliche Beanspruchung der Leitungen oder Schläuche, wie Reibung, Zug, Druck oder Verdrehung, eine relative Drehbewegung von mehr als 360° realisiert werden kann. Das System soll einfach im Aufbau, leicht zu montieren und zu warten sein, wobei möglichst wenig Verschleißteile zur Anwendung kommen sollten.

Diese Aufgabe wird erfindungsgemäß durch die Kombination folgender Merkmale gelöst:
- auf dem Wagen sind Führungsschienen auf unterschiedlichen Radien zur Aufnahme der die Leitungen haltenden Führungselemente vorgesehen,
- die Führungsschienen sind zumindest im Bereich ihres einen Endes über jeweils einen Bogen miteinander verbunden,
- die Leitungen sind im Bereich der Symmetrieachse der Führungselemente unmittelbar übereinander angeordnet, und
- die Führungselemente sind gegenüber dem Wagen in Umfangsrichtung relativ bewegbar, dergestalt, daß die Leitungen im Bereich des Wagens von einem Außen- auf einen Innenkreis zwischen Innen- und Außenradius der Führungsbahnen umlenkbar sind.

Vorteilhafte Weiterbildungen des Erfindungsgegenstandes sind den Unteransprüchen zu entnehmen.

Mit Hilfe des Erfindungsgegenstandes können Leitungen von einem drehenden System ohne zusätzliche Beanspruchung durch Reibung sowie Zug, Druck und Verdrehung um mehr als 360° um eine Achse gedreht werden. Dies geschieht in der Art, daß von einem festen Einspeisepunkt die Leitungen auf einem fahrbaren Wagen geführt werden, so daß der Abgabepunkt des drehenden Systems sich um eine Achse drehen kann, ohne daß die Leitungen eine Verdrehung oder Längenänderung jeglicher Art erfahren. Dies ist nur dann möglich, wenn die Leitungen in einer Symmetrieachse übereinander angeordnet sind. Hierbei kann der Innenraum des Drehzentrums freibleiben.

Am drehenden oder am feststehenden System sind Führungsbahnen angebracht, auf denen der Wagen des Umlenksystems geführt wird. In diesem fahrbaren Wagen werden die Leitungen dergestalt geführt, daß sie von einem Innenauf einen Außenkreis umgelenkt werden. Diese Umlenkung geschieht in der Art, daß auf dem fahrbaren Wagen Führungsschienen angebracht sind, in welchen die Führungselemente, wie Gliederketten, elastische Bänder, insbesondere aus Federstahl, oder dgl., bei vertikaler Anordnung oben bzw. unten geführt werden.

An den übereinander angeordneten Gliederketten sind entsprechende Verbindungselemente, wie Bolzen oder dgl. angebracht, an welchen die Halterungen für die Leitungen befestigt werden und in der Symmetrieachse der Gliederkette liegen und somit beweglich sind. Die Gliederketten mit einer konstanten Länge werden mittels Horizontal- sowie Vertikalrollen so geführt, daß die Gliederketten sowohl Zug als auch Druck übertragen kann. Infolge der konstanten Länge der Gliederketten werden die Leitungen nur auf Biegung beansprucht.

Bei Verwendung von Bändern beispielsweise aus Federstahl werden diese vorzugsweise von Bolzen mit daran angeformten Klemmen gehalten, wobei die Bolzen gelenkig mit den Halterungen für die Leitungen verbunden sind. Um den Verschleiß an den Federstahlbändern bei der Umlenkung zu reduzieren, sind die Führungsschienen im Bereich ihrer den Bändern zugewandten Flächen mit Kunststoffelementen (Leisten) versehen.

Unter bestimmten Voraussetzungen, d.h. wenn der Einspeisepunkt vom feststehenden Teil bzw. der Ausspeisepunkt vom drehenden Teil der Leitungen einander gegenüberliegen, kann die erste Leitungsreihe durch eine erste Bogenführung einmal rechts herum und die zweite Leitungsreihe durch eine zweite Bogenführung einmal links herum geführt werden. Anhand eines solchen Zwei-Bogen-Führungssystems kann, da in einem Kabelwagen zwei Bogenführungen vorhanden sind und zwei Leitungsreihen zugleich geführt werden können, die Bauhöhe um die Hälfte reduziert werden. Der Wagen ist im gleichen Fall für beide Umfangsdrehrichtungen (sowohl links als auch rechts herum) verwendbar, so daß ein Drehbereich größer 360° erzielt werden kann, ohne daß es zu einer Beeinträchtigung der Leitungen kommt.

Bevorzugte Anwendungsfälle des Erfindungsgegenstandes werden bei der Energieübertragung von Baumaschinen und Tagebaugeräten sowie Krananlagen, Hafenumschlagsanlagen oder dgl. gesehen.

Die Erfindung ist anhand eines Ausführungsbeispieles in der Zeichnung dargestellt und wird wie folgt beschrieben. Es zeigen:
- Figur 1 -: Querschnitt durch ein feststehendes System samt Führungsschienen in der Draufsicht
- Figur 2 -: Querschnitt durch einen verfahrbaren Wagen samt Leitungsführung mit Gliederketten als Führungselemente
- Figur 3 -: Querschnitt durch einen verfahrbaren Wagen samt Leitungsführung mit Federstahlbändern als Führungselemente
- Figur 4 -: Querschnitt durch die Führung der Energieleitungen gemäß Figur 2
- Figur 5 -: Alternative zur Figur 1 mit einem Zwei-Bogen-Führungssystem.

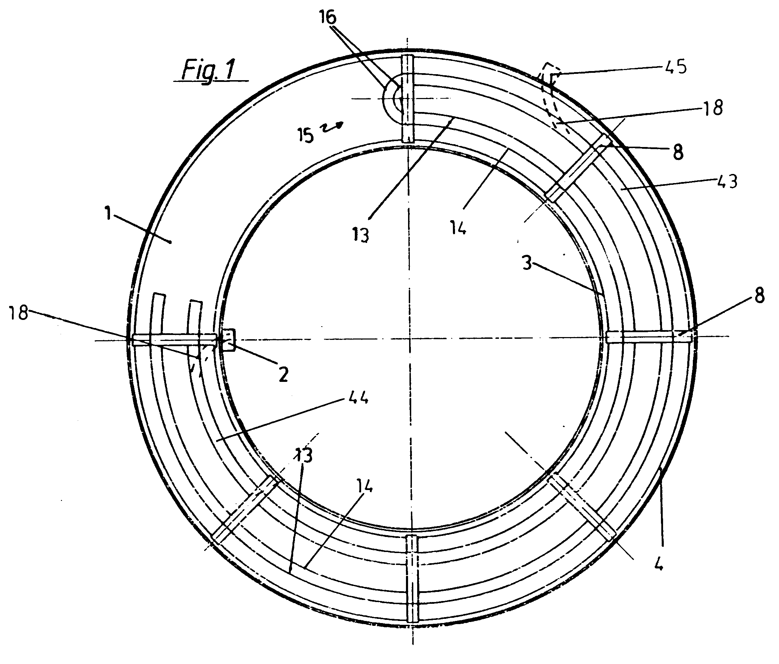

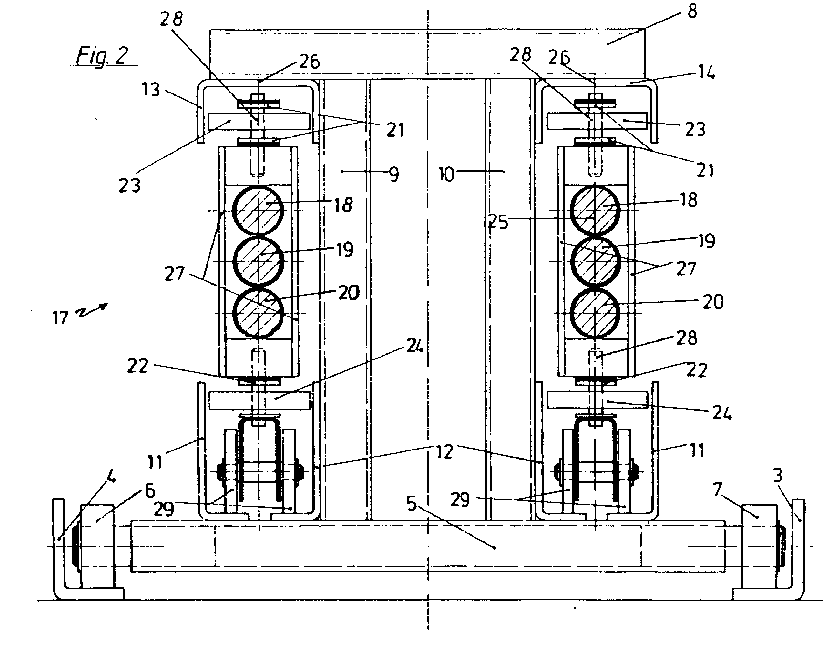

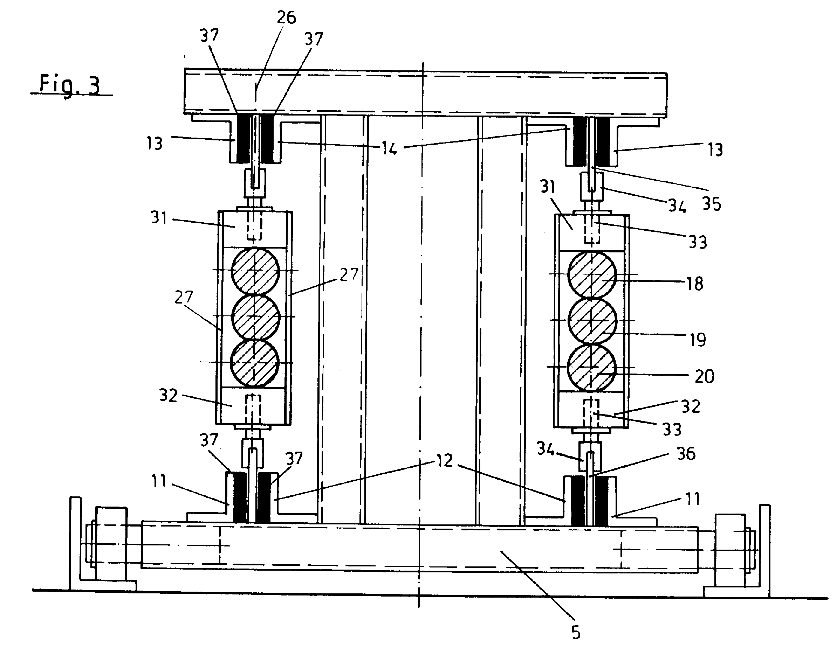

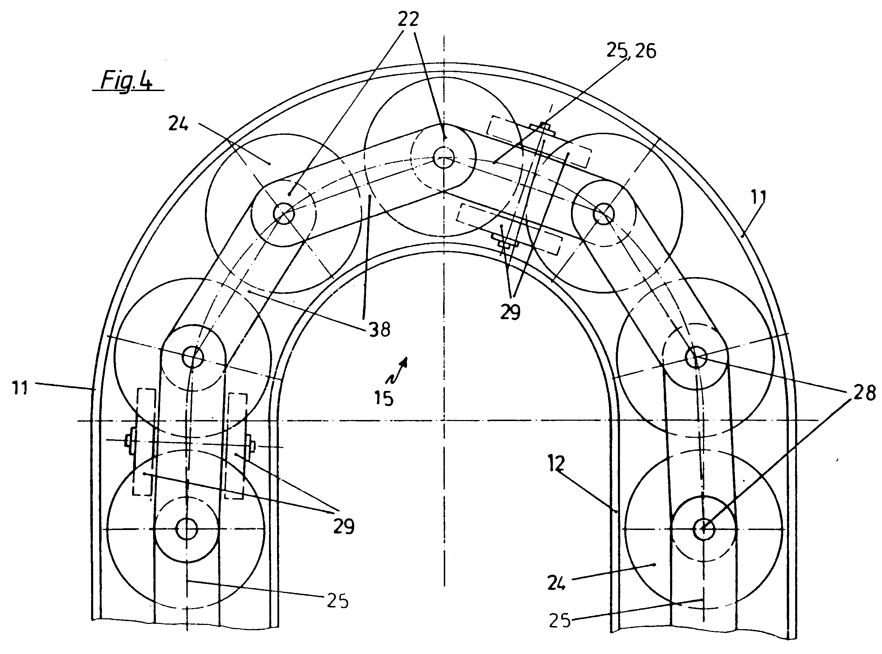

Figur 1 zeigt einen Querschnitt durch ein feststehendes System 1, das beispielsweise durch den Unterwagen eines Schaufelradbaggers gebildet werden kann und einen nur angedeuteten Einspeisepunkt 2 für die hier nicht weiter dargestellten Leitungen aufweist. Der zugehörige, gegenüber dem feststehenden System drehbare Teil, beispielsweise ein Oberwagen eines Schaufelradbaggers, ist aus Gründen der Übersicht hier nicht dargestellt. An dem feststehenden System 1 sind kreisringförmige Führungsbahnen 3,4 unter Bildung eines Innen- und eines Außenradius vorgesehen. Auf diesen Führungsbahnen 3,4 ist der in den Figuren 2 und 3 dargestellte Wagen 5 mittels Laufrollen 6,7 in beiden Umfangsrichtungen verfahrbar. In vorgegebenen Abständen sind am Umfang des feststehenden Systems 1 verteilt angeordnete Tragkonstruktionen 8 vorgesehen, die über Vertikalstützen 9,10 mit dem Wagen 5 verbunden sind (Figuren 2 und 3). Sowohl an dem feststehenden System 1 als auch an den Tragkonstruktionen 8 sind kreisringförmige, einander gegenüberliegende Führungsschienen 11,12,13,14 vorgesehen, wobei gemäß Figur 1 im Bereich eines Umfangsendes 15 der Führungsschienen 13,14 entsprechende als Führungsschienen für die Umlenkung dienende Bögen 16 vorgesehen sind, die die einzelnen Führungsschienen 11,12 und 13,14 untereinander verbinden (Figur 4). Der Ausspeisepunkt 45 ist hierbei wegen Fehlens des drehbaren Systems nur gestrichelt angedeutet. Die Kabelführung stellt sich etwa wie folgt dar:
im Einspeisepunkt 2 wird der zusammengefaßte Kabelstrang 18 in den Bereich 44 zwischen den Führungsschienen 13,14 eingeführt und vom nicht weiter dargestellten Wagen 5 (Figuren 2 und 3) aufgenommen. Im Bereich der Bögen 16 wird der Kabelstrang 18 vom Innen- auf den Außenkreis umgelenkt und liegt nun im Bereich 43 zwischen den Führungsschienen 13,14, von wo aus der Kabelstrang 18 am Ausspeisepunkt 45 in das nicht weiter dargestellte drehende System eingebracht wird.

Figur 2 zeigt einen Querschnitt durch den Wagen 5 samt Tragkonstruktion 8-10 sowie den Führungsschienen 11-14. Der Wagen 5 selber kann, wie bereits angesprochen, in den Im Querschnitt rechtwinklig ausgebildeten Führungsbahnen 3,4 mittels Laufrollen 6,7 in beiden Umfangsrichtungen bewegt werden. Unmittelbar auf dem Wagen 5 sind im Querschnitt ebenfalls rechtwinklig ausgebildete Führungsschienen 11,12 vorgesehen. An der Tragkonstruktion 8 sind im Querschnitt U-förmige weitere Führungsschienen 13,14 angeordnet, die den Führungsschienen 11,12 axial gegenüberliegen. Zwischen den axial beabstandeten Führungsschienen 11,12 und 13,14 erstrecken sich die Führungselemente 17, die die Leitungen 18,19,20 aufnehmen und halten. Die Führungselemente 17 werden durch je eine obere sowie eine untere Gliederkette 21,22 gebildet, die sich über Horizontalrollen 23,24 an den zugehörigen Vertikalschenkeln der Führungsschienen 11 und 12 sowie 13 und 14 abstützen. Die Leitungen 18-20 sind vertikal übereinander angeordnet und liegen mit ihrer Mittellinie 25 in der Symmetrieachse 26 der Gliederketten 21,22. Die Leitungen 18-20 werden in vorgegebenen Abständen von Halterungen 27 umgeben, die im Bereich ihrer freien Enden über Bolzen 28 mit den Gliederketten 21,22 verbunden sind. Durch diese Maßnahme sind die Halterungen 27 schwenkbar gelagert, wobei die Leitungen 18-20 in der Symmetrieachse 26 der Gliederketten 21,22 auch bei der Umlenkung gehalten werden können. Im Bereich der unteren Führungsschienen 11,12 sind unterhalb der Horizontalrollen 24 noch Vertikalrollen 29 vorgesehen, die auf den zugehörigen Horizontalschenkeln der Führungsschienen 11,12 abrollen.

Figur 3 zeigt einen Querschnitt durch den verfahrbaren Wagen 5 gemäß Figur 2 mit einem alternativen Führungselement 30, Die Leitungen 18-20 werden zwischen den Halterungen 27 geführt. In den freien Endbereichen 31,32 sind Bolzen 33 gelenkig verlagert, die außerhalb ihres Verbindungsbereiches in Klemmen 34 auslaufen. Die Klemmen 34 dienen zur Halterung der als Federstahlbänder 35,36 ausgebildeten Führungselemente 30, die wiederum zwischen den Führungsschienen 11-14 geführt werden. Zur Vermeidung größeren Verschleißes an den Bändern 35,36 sind die Führungsschienen 11-14 auf ihren den Bändern 35,36 zugewandten Flächen mit Kunststoffleisten 37 versehen. Analog zu Figur 2 sind die Leitungen 18-20 ebenfalls auf der Symmetrieachse 26 der Bänder 35,36 angeordnet.

Figur 4 zeigt im Querschnitt einen der Umfangsendbereiche 15. Erkennbar sind die Führungsschienen 11,12, die mit vorgegebenem Abstand zueinander angeordneten Vertikalrollen 29, die Horizontalrollen 24 sowie die Glieder 38 der Gliederkette 22. Erkennbar ist, daß an jedem Glied 38 der Gliederkette 22 eine Horizontalrolle 24 vorgesehen ist, die mittels der Bolzen 28 miteinander verbunden sind. Die Symmetrieachse 26 der Gliederkette 22 ist identisch mit der Mittellinie 25 der hier nicht weiter dargestellten Leitungen 18-20, so daß eine problemlose Umlenkung der Leitungen vom Außenbereich 43 auf den Innenbereich 44 ohne zusätzliche Beanspruchung, wie Reibung, Zug, Druck oder Verdrehung, gegeben ist.

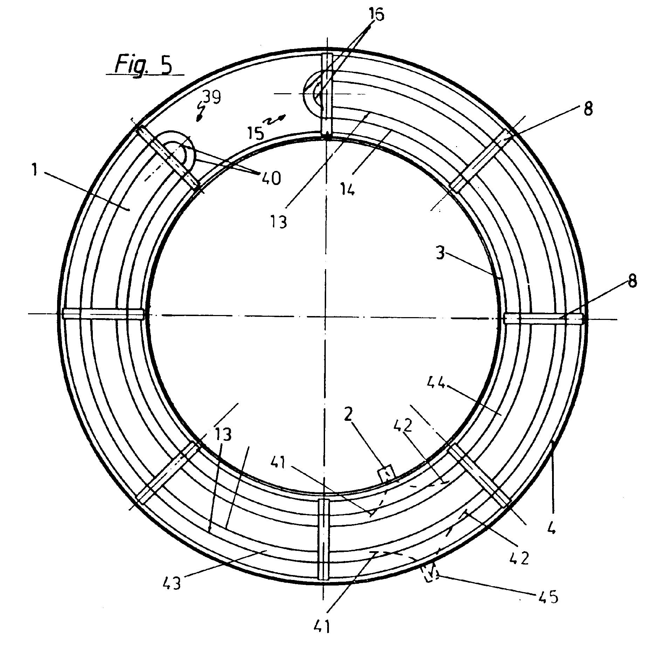

Figur 5 zeigt eine Alternative zu Figur 1. Erkennbar ist das feststehende System 1 und der Einspeisepunkt 2 sowie der nur angedeutete, dem nicht weiter dargestellten drehbaren System zugeordnete Ausspeisepunkt 45, wobei Ein- und Ausspeisepunkt 2,45 einander gegenüberliegen. Ferner erkennbar sind die Führungsbahnen 3,4, die Tragkonstruktion 8 sowie die Führungsschienen 13,14. Wie bereits zu Figur 1 angesprochen, sind im einen Umfangsendbereich 15 die Führungsschienen 13,14 mittels als Führungsschienen ausgebildeter Bögen 16 miteinander verbunden. Im Gegensatz zu Figur 1 weist Figur 4 auch im zweiten Umfangsendbereich 39 einen Bogen 40 auf, der die Führungsschienen 13,14 auch in diesem Bereich untereinander verbindet. Bei dieser konstruktiven Ausgestaltung kann der erste Kabelstrang 41 durch die erste Bogenführung 16 einmal rechts herum und der zweite Kabelstrang 42 durch die zweite Bogenführung 40 einmal links herum geführt werden. Anhand dieser Konstruktion des Zwei-Bogen-Führungssystems 16,40 kann, da in einem Wagen 5 zwei Bogenführungen 16,40 vorhanden sind und somit zwei Leitungsreihen zugleich geführt werden können, die Bauhöhe um die Hälfte reduziert werden.

Die Leitungsführung stellt sich etwa wie folgt dar:
im Einspeisepunkt 2 werden zwei Kabelstränge 41,42 eingeführt, dergestalt, daß der erste Kabelstrang 41 im Uhrzeigersinn und der zweite Kabelstrang 42 entgegengesetzt dazu in den Bereich 44 zwischen den Führungsschienen 13,14 dem nicht weiter dargestellten Wagen 5 zugeführt werden. Der erste Kabelstrang 41 wird im Bereich der Bögen 40 und der zweite Kabelstrang 42 im Bereich der Bögen 16 umgelenkt. Über den Führungsbereich 43 gelangen beide Kabelstränge 41,42 zum gemeinsamen Ausspeisepunkt 45 eines nicht weiter dargestellten drehenden Systems. Der Vorteil dieser Art von Energieleitungsführung ist in der Halbierung der Bauhöhe begründet, da die Energieleitungen 41,42 jeweils zur Hälfte in entgegengesetzten Umfangsrichtungen geführt und umgelenkt werden können.

## Patentansprüche

1. Einrichtung zur Energieübertragung bei Drehbewegungen, insbesondere von einem feststehenden (1) zu einem drehenden System oder umgekehrt, mit einem festen Einspeise- (2) und einem variablen Ausspeisepunkt (45), Führungsbahnen (3,4), die unter Bildung eines Innen- sowie eines Außenradius im Bereich des drehbaren bzw. des feststehenden Systems (1) angeordnet sind, einem auf diesen Führungsbahnen (3,4) in Umfangsrichtung verfahrbaren Wagen (5) sowie im Bereich des Wagens (5) vorgesehenen Führungselementen (17,30) zur Aufnahme und Umlenkung der axial übereinander angeordneten Leitungen (18,19,20,41,42), gekennzeichnet durch folgende Merkmale:
- auf dem Wagen (5) sind Führungsschienen (11,12) auf unterschiedlichen Radien zur Aufnahme der die Leitungen (18,19,20,41,42) haltenden Führungselemente (17,30) vorgesehen,
- die Führungsschienen (11,12) sind zumindest im Bereich ihres einen Endes (15) über jeweils einen Bogen (16) miteinander verbunden,
- die Leitungen (18-20,41,42) sind im Bereich der Symmetrieachse (26) der Führungselemente (17,30) unmittelbar übereinander angeordnet, und
- die Führungselemente (17,30) sind gegenüber dem Wagen (5) in Umfangsrichtung relativ bewegbar, dergestalt, daß die Leitungen (18-20,41,42) im Bereich des Wagens (5) von einem Außenbereich (43) auf einen Innenbereich (44) zwischen Innen- und Außenradius der Führungsbahnen (3,4) umlenkbar sind.

2. Einrichtung nach Anspruch 1, dadurch gekennzeichnet, daß der Wagen (5) einen kreisringförmigen Querschnitt und eine Umfangserstreckung kleiner 360° aufweist.

3. Einrichtung nach den Ansprüchen 1 und 2, dadurch gekennzeichnet, daß die Führungsschienen (11,12) im Bereich Ihrer beiden Enden (15,39) über entsprechende Bögen (16,40) miteinander verbunden sind, wobei die Leitungen (41,42) ausgehend von einem gemeinsamen Einspeisepunkt (2), in entgegengesetzte Umfangsrichtungen in den Bereich des Wagens (5) geführt, im Bereich der Bögen (16,40) umgelenkt und im Bereich eines gemeinsamen Ausspeisepunktes (45) abgeführt werden.

4. Einrichtung nach den Ansprüchen 1 bis 3, dadurch gekennzeichnet, daß der Wagen (5) mit einer Tragkonstruktion (8-10) zur Aufnahme weiterer Führungsschienen (13,14) samt Bögen (16,40) versehen ist, die den ersten Führungsschienen (11,12) gegenüberliegen und die Führungselemente (17,30) samt Leitungen (18-20, 41,42) zwischen sich aufnehmen.

5. Einrichtung nach den Ansprüchen 1 bis 4, dadurch gekennzeichnet, daß die Führungselemente (17) durch mindestens eine obere sowie eine untere Gliederkette (21,22) gebildet sind.

6. Einrichtung nach den Ansprüchen 1 bis 5, dadurch gekennzeichnet, daß zwischen den Gliederketten (21,22) in vorgegebenen Abständen, die Leitungen (18-20) umschließende Halterungen (27) vorgesehen sind.

7. Einrichtung nach den Ansprüchen 1 bis 6, dadurch gekennzeichnet, daß die Halterungen (27) über Verbindungselemente (28), wie Bolzen oder dgl., mit den zugehörigen Gliedern (38) der jeweiligen Gliederkette (21,22) verbunden sind.

8. Einrichtung nach den Ansprüchen 1 bis 7, dadurch gekennzeichnet, daß an den Gliedern (38) der jeweiligen Gliederketten (21,22) Horizontalrollen (24) angeordnet sind, die sich an den zugehörigen Schenkeln der Führungsschienen (11-14) abstützen.

9. Einrichtung nach den Ansprüchen 1 bis 8, dadurch gekennzeichnet, daß an einer der Gliederketten (22) in vorgegebenen Abständen Vertikalrollen (29) vorgesehen sind, die auf den zugehörigen Schenkeln der Führungsschienen (11,12) abrollen.

10. Einrichtung nach den Ansprüchen 1 bis 4, dadurch gekennzeichnet, daß die Führungselemente (30) durch biegsame, elastische Bänder (35,36) gebildet sind, die über diese beidseitig umgreifende Klemmen (33) mit den die Leitungen (18-20) zwischen sich aufnehmenden Halterungen (27) verbunden sind.

11. Einrichtung nach Anspruch 10, dadurch gekennzeichnet, daß die Bänder (35,36) aus Federstahl gebildet sind.

12. Einrichtung nach Anspruch 10, dadurch gekennzeichnet, daß die Bänder (35,36) aus Kunststoff gebildet sind.

13. Einrichtung nach den Ansprüchen 10 bis 12, dadurch gekennzeichnet, daß die Klemmen (33) im Bereich der Halterungen (27) nach Art eines Bolzens (32) ausgebildet sind.

14. Einrichtung nach den Ansprüchen 10 bis 13, dadurch gekennzeichnet, daß die Bolzen (32) gegenüber den Halterungen (27) gelenkig verlagert sind.

15. Einrichtung nach den Ansprüchen 1 bis 14, dadurch gekennzeichnet, daß die Führungsschienen (11-14) einen rechtwinkligen bis U-förmigen Querschnitt aufweisen.

16. Einrichtung nach den Ansprüchen 1 bis 15, dadurch gekennzeichnet, daß die Führungsschienen (11-14), insbesondere bei Verwendung von Federstahlbändern (35,36) als Führungselemente (30), auf ihren den Bändern (35,36) zugewandten Seiten mit Kunststoffelementen (37) versehen sind.

## Claims

1. Device for power transfer during rotary motion, in particular from a stationary (1) to a rotating system or vice versa, having a fixed feed point (2) and a variable delivery point (45), guideways (3, 4), which are arranged in the area of the rotatable or stationary system (1) on formation of an inside and an outside radius, having a cradle (5), which may run on these guideways (3, 4) in peripheral direction, and guide elements (17, 30) provided in the area of the cradle (5) to receive and deflect the lines (18, 19, 20, 41, 42) arranged axially one above the other, characterised by the following features:
- guide rails (11, 12) are provided on the cradle (5) on different radii to receive the guide elements (17, 30) holding the lines (18, 19, 20, 41, 42);
- the guide rails (11, 12) are connected to one another at least in the area of their one end (15) by a bow (16) in each case;
- the lines (18-20, 41, 42) are arranged directly one above the other in the area of the axis of symmetry (26) of the guide elements (17, 30), and
- the guide elements (17, 30) are relatively movable in peripheral direction in relation to the cradle (5) in such a way that the lines (18-20, 41, 42) may be deflected in the area of the cradle (5) from an outside area (43) to an inside area (44) between the inside and outside radius of the guideways (3, 4).

2. Device according to Claim 1, characterised in that the cradle (5) has a circular cross-section and a peripheral extension of less than 360°.

3. Device according to Claims 1 and 2, characterised in that the guide rails (11, 12) are connected to one another in the area of their two ends (15, 39) via corresponding bows (16, 40), wherein the lines (41, 42) from a common feed point (2) are guided in opposite peripheral directions into the area of the cradle (5), are deflected in the area of the bows (16, 40) and are delivered in the area of a common delivery point (45).

4. Device according to Claims 1 to 3, characterised in that the cradle (5) is provided with a support structure (8-10) to receive further guide rails (13, 14) with bows (16, 40), which are located opposite the first guide rails (11, 12) and receive the guide elements (17, 30) with lines (18-20, 41, 42) between them.

5. Device according to Claims 1 to 4, characterised in that the guide elements (17) are formed by at least one upper and one lower round-link chain (21, 22).

6. Device according to Claims 1 to 5, characterised in that clamp assemblies (27) enclosing the lines (18-20) are spaced at given distances between the round-link chains (21, 22).

7. Device according to Claims 1 to 6, characterised in that the clamp assemblies (27) are connected via connecting elements (28) such as bolts or similar to the corresponding links (38) of the respective round-link chain (21, 22).

8. Device according to Claims 1 to 7, characterised in that horizontal rollers (24), which are supported on the respective legs of the guide rails (11-14), are arranged on the links (38) of the respective round-link chains (21, 22).

9. Device according to Claims 1 to 8, characterised in that vertical rollers (29), which roll along the corresponding legs of the guide rails (11, 12), are spaced at given distances on one of the round-link chains (22).

10. Device according to Claims 1 to 4, characterised in that the guide elements (30) are formed by flexible, elastic bands (35, 36), which are connected via clamps (33) gripping these on both sides to the clamp assemblies (27) receiving the lines (18-20) between them.

11. Device according to Claim 10, characterised in that the bands (35, 36) are made of spring steel.

12. Device according to Claim 10, characterised in that the bands (35, 36) are made of plastic.

13. Device according to Claims 10 to 12, characterised in that the clamps (33) are provided in the form of bolts (32) in the area of the clamp assemblies (27).

14. Device according to Claims 10 to 13, characterised in that the bolts (32) are hinged in relation to the clamp assemblies (27).

15. Device according to Claims 1 to 14, characterised in that the guide rails (11-14) are perpendicular to U-shaped in cross-section.

16. Device according to Claims 1 to 15, characterised in that the guide rails (11-14) are provided with plastic elements (37) on their sides facing the bands (35, 36), particularly when spring steel bands (35, 36) are used as guide elements (30).

## Revendications

1. Dispositif de transmission d'énergie en mouvement rotatif, partant en particulier d'un système fixe (1) vers un système rotatif ou inversement et muni d'un point d'alimentation fixe (2) et d'un point de départ variable (45), de glissières (3, 4) qui sont disposées dans la zone du système rotatif ou du système fixe (1), avec formation d'un rayon intérieur ainsi que d'un rayon extérieur, d'un chariot (5) déplaçable sur ces glissières (3, 4) dans le sens circonférentiel ainsi que d'éléments de guidage (17, 30) prévus dans la zone du chariot (5) et destinés à recevoir et à dévier les conduites (18, 19, 20, 41, 42) disposées axialement les unes au-dessus des autres, caractérisé par les caractéristiques suivantes :
- sur le chariot (5) sont prévues des glissières (11, 12) sur des rayons différents pour le logement des éléments de guidage (17, 30) qui supportent les conduites (18, 19, 20, 41, 42),
- les glissières (11, 12) sont reliées entre elles à chaque fois, au moins dans la zone d'une de leurs extrémités (15), par l'intermédiaire d'un arc (16),
- les conduites (18-20, 41, 42) sont disposées directement les unes au-dessus des autres, dans la zone de l'axe de symétrie (26) des éléments de guidage (17, 30) et
- les éléments de guidage (17, 30) sont relativement mobiles dans le sens circonférentiel par rapport au chariot (5), de sorte que les conduites (18-20, 41,
42) peuvent être déviées dans la zone du chariot (5) d'une zone extérieure (43) sur une zone intérieure (44), entre le rayon intérieur et le rayon extérieur des glissières (3, 4).

2. Dispositif selon la revendication 1, caractérisé en ce que le chariot (5) présente une section transversale en forme d'anneau de cercle et une circonférence inférieure à 360°.

3. Dispositif selon les revendications 1 et 2, caractérisé en ce que les glissières (11, 12) sont reliées entre elles, dans la zone de leurs deux extrémités (15, 39) par l'intermédiaire d'arcs correspondants (16, 40), les conduites (41, 42) partant d'un point commun d'alimentation (2) et guidées dans des sens circonférentiels inverses dans la zone du chariot (5) étant déviées dans la zone des arcs (16, 40) et évacuées dans la zone d'un point de départ commun (45).

4. Dispositif selon les revendications 1 à 3, caractérisé en ce que le chariot (5) est muni d'un appareil porteur (8-10) destiné à recevoir des glissières supplémentaires (13, 14) avec des arcs (16, 40), glissières qui se trouvent en face des premières glissières (11, 12) et qui logent entre elles les éléments de guidage (17, 30) avec les conduites (18-20, 41, 42).

5. Dispositif selon les revendications 1 à 4, caractérisé en ce que les éléments de guidage (17) sont constitués par au moins une chaîne à maillons supérieure ainsi qu'une chaîne à maillons inférieure (21, 22).

6. Dispositif selon les revendications 1 à 5, caractérisé en ce que des fixations (27) entourant les conduites (18-20) sont prévues entre les chaînes à maillons (21, 22), dans des écartements donnés.

7. Dispositif selon les revendications 1 à 6, caractérisé en que les fixations (27) sont reliées aux maillons correspondants (38) de chaque chaîne à maillons (21, 22) par l'intermédiaire d'éléments de jonction (28) comme des boulons ou des pièces similaires.

8. Dispositif selon les revendications 1 à 7, caractérisé en ce que des poulies horizontales (24) sont disposées sur les maillons (38) de chaque chaîne à maillons (21, 22), poulies horizontales qui s'appuient sur les montants correspondants des glissières (11-14).

9. Dispositif selon les revendications 1 à 8, caractérisé en ce que des poulies verticales (29) sont prévues sur l'une des chaînes à maillons (22), dans des écartements donnés, poulies verticales qui partent en dérive sur les montants correspondants des glissières (11, 12).

10. Dispositif selon les revendications 1 à 4, caractérisé en ce que les éléments de guidage (30) sont constitués par des bandes flexibles et élastiques (35, 36) qui sont reliées aux fixations (27) qui reçoivent les conduites (18-20) entre elles par l'intermédiaire de pinces (33) qui serrent ces bandes des deux côtés.

11. Dispositif selon la revendication 10, caractérisé en ce que les bandes (35, 36) sont constituées par de l'acier à ressorts.

12. Dispositif selon la revendication 10, caractérisé en ce que les bandes (35, 36) sont constituées par une matière synthétique.

13. Dispositif selon les revendications 10 à 12, caractérisé en ce que les pinces (33) situées dans la zone des fixations (27) sont conçues comme des boulons (32).

14. Dispositif selon les revendications 10 à 13, caractérisé en ce que les boulons (32) sont déplacés de manière articulée par rapport aux fixations (27).

15. Dispositif selon les revendications 1 à 14, caractérisé en ce que les glissières (11-14) présentent une section transversale qui peut avoir une forme rectangulaire jusqu'à une forme en U.

16. Dispositif selon les revendications 1 à 15, caractérisé en ce qu'en particulier lors de l'utilisation de bandes d'acier à ressorts (35, 36) en tant qu'éléments de guidage (30), les glissières (11-14) sont munies d'éléments en matière synthétique (37) sur leurs faces tournées vers les bandes (35, 36).
